# EUROPEAN PATENT SPECIFICATION

(11) **EP 3 391 550 B1**
(45) Date of publication and mention of the grant of the patent: **12.06.2024**
(21) Application number: 16834110.5
(22) Date of filing: 19.12.2016
(51) Int. Cl.: H04B 5/00

(54) **ANTENNA SYSTEM WITH TWO ANTENNAS, MAINLY FOR NFC TRANSMISSION**
ANTENNENSYSTEM MIT ZWEI ANTENNEN, INSBESONDERE FÜR NFC-ÜBERTRAGUNG
SYSTÈME D'ANTENNES À DEUX ANTENNES, PRINCIPALEMENT POUR UNE TRANSMISSION NFC

(30) Priority: 20.12.2015 SK 500882015
(43) Date of publication of application: 24.10.2018
(73) Proprietor: Logomotion, s.r.o., 921 01 Piestany (SK)
(72) Inventor: HUBINÁK, Emil, 921 01 Pie any (SK)
(74) Representative: Porubcan, Róbert
(86) International application number: PCT/IB2016/057796
(87) International publication number: WO 2017/109681

(56) References cited:
- CN-A- 103 633 421
- US-A1- 2001 026 244

## Description

### Field of technology

The invention concerns an antenna system which has a solenoid transmitting antenna and the cooperating flat spiral receiving antenna, whereby the antennas have a connection and mutual arrangement which produces their electromagnetic isolation. The antenna system solves the problem with the synchronization of the frequency and a phase between the transmitter and the receiver, mainly during the NFC transmission and receiving.

### Prior state of the art

Flat spiral antennas are primarily used during the communication by means of the NFC platform, mainly according to ISO/IEC 14443 standard. The NFC platform operates on the globally available and non-licensed radio ISM frequency in the bandwidth 13,56 MHz and it can use one of the three main communication modes: passive, active or pseudo-passive. In case of the passive mode, the initiator/transmitter (PCD) offers the carrying field and the energy for the device of the transponder/receiver (PICC, for example payment cards) which responds by means of the modulated carrying field (load modulation). The antenna of the receiver has to be sufficiently large so it can cover all energy demands of the receiver which in this case lacks its own source of the energy. In the active mode both devices generate their own electromagnetic field; the dimensions of their antennas can be smaller than is the case in passive mode.

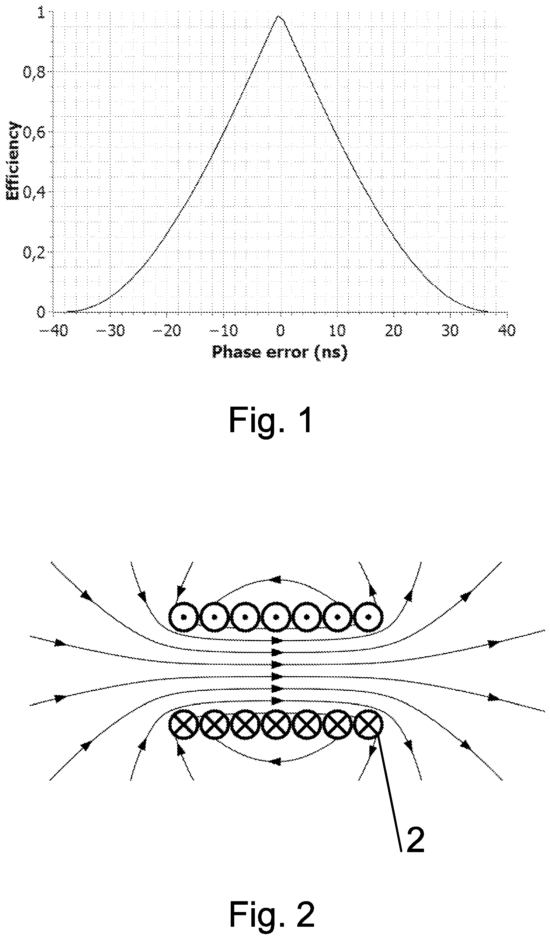

Pseudo-passive mode is characterized by the fact that both devices have their own source of energy; the magnetic field is only for the transfer of data, but during the communication the communication protocol is used as in the passive mode (card-emulation mode). The transponder actively transmits the carrier frequency which is phase-modulated in such a way that this frequency together - in sum - with the carrier frequency from the initiator creates the amplitude modulation. It is necessary that the carrier frequency is transmitted by the transponder exactly in the phase or exactly in the counter-phase with the carrier frequency from the initiator. The dependence between the phase error and efficacy is on the figure 1. It is necessary to achieve the temporal accuracy better than ± 2 ns, when the efficacy is approximately 95%. When the phase error is ±10 ns, the efficacy falls to 60%.

If a single antenna for the reception and transmission is used, the level of the resonant voltage on the antenna during the transmission is significantly higher that the level of the received signal (tenths of volts as opposed to tenths of minivolts). During the transmission of the transponder the signal received from the initiator is so distorted by the transmission itself that it is basically unreadable. The synchronization circuits of the transponder have to remember the frequency and phase of the carrier frequency from the initiator before the transmission of the data itself takes place, since the additional synchronization/correction during the transmission itself is practically impossible. In order to keep the accuracy at ±2 ns during the whole 256B transmission, the accuracy of the tuning of the system must be better than 1ppm, which is technically a very difficult task.

The antenna device according to the publication CN103633421A is provided with the components of: a substrate which is composed of magnetic substrates, a solenoid antenna component which is annularly coiled alternately through the main surface of one substrate and the main surface of the other substrate, and a planar spiral antenna element which is superposed above the solenoid antenna component.

A loop antenna device according to the publication US2001026244 has a first antenna generating a first magnetic field and a second antenna generating a second magnetic field such that the first magnetic field and the second magnetic field each have a different axis. A series resonant circuit and a parallel resonant circuit are provided for the first antenna and the second antenna, respectively. The series resonant circuit has at least a second coil, a link coil wound around a ferrite core, and a capacitor in series. The parallel resonant circuit has a first coil and a capacitor.

Publication US2015256223 (A1) uses two differently sized antennas with the mutual configuration - one antenna serves for reception and other one for transmission; both antennas are, however, typical flat spiral antennas and they require large available space. Solution according to WO2011048728 (A1) uses two flat antennas synchronized by the electromagnetic induction. These solutions cannot be used in cases the NFC communication element is placed in the shielded (shaded) device - for example in the mobile phone - and they also cannot be used in case the available surface is not sufficient for the placement of large flat spiral antenna. Proposed invention solves the problem with synchronization during concurrent transmission and receiving, especially when the available surface is less than 150mm² or when the device is electromagnetically shielded.

### Essence of the invention

The invention is defined in claims 1 to 10. The abovementioned differences are significantly remedied by the antenna system with two antennas, mainly for NFC transfer, where the first antenna is solenoid with a ferrite core, and second antenna is spiral with quadrilateral shape of the loop, where each antenna has its own impedance matching, and the antennas are placed in a common basic plane, or in mutually parallel planes, according to this invention which essence lies in the fact that the solenoid antenna has a length which corresponds to the length of the flat antenna, the longitudinal axes of both antennas are parallel and the magnetic middle of the flat spiral antenna lies in the transversal axial plane of the solenoid antenna which runs through its magnetic middle, or the distance of the magnetic middle of the flat spiral antenna from the transversal axial plane of the solenoid antenna is a tenth of the length of the solenoid antenna at most. The distance between the longitudinal axis of the solenoid antenna from the longitudinal axis of the spiral antenna is at least 0,75 times the length of the solenoid antenna, preferably the distance is the value of the length of the solenoid antenna.

The term "solenoid antenna" denotes mainly a cylindrical coil with multiple threads of the conductor, where the length of the coil is larger than its diameter; usually the length of the coil is five times its diameter.

The length of the solenoid antenna - that is, its dimension in the longitudinal direction - is related to other proportions of the antenna system according to this invention. The length of this solenoid antenna corresponds to the length of the spiral antenna within the ± 10% margin. The length of the surface of the spiral antenna is a dimension of the antenna in the direction which is parallel with the longitudinal axis of the solenoid antenna. Usually, the larger from the two groundplan dimensions of the flat spiral antenna will count. An arrangement has precisely proved to be advantageous where the width of the flat spiral antenna is half its length within the ± 25% margin. In such case the flat spiral antenna will have a rectangular groundplan with the side lengths in 2:1 (length : width) ratio.

Preferably, both antennas are placed on the common substrate - that is, on the identical surface. An arrangement is also possible, though, where the antennas are on different surfaces, or on the independent carriers, eventually; what is important is that the longitudinal axis of the solenoid antenna is parallel with the surface where flat spiral antenna lies. The antenna system according to this invention has mutually symmetrical and orthogonal arrangement of two antennas.

The longitudinal axes are parallel; the transversal magnetic axes of both antennas are either identical or the distance between them is a tenth of the length of the solenoid antenna at most. The magnetic middle of the antenna - which has a suitable and even, symmetrical construction - will be usually identical with the geometrical middle of the antenna. In such case the edges of both antennas will be aligned.

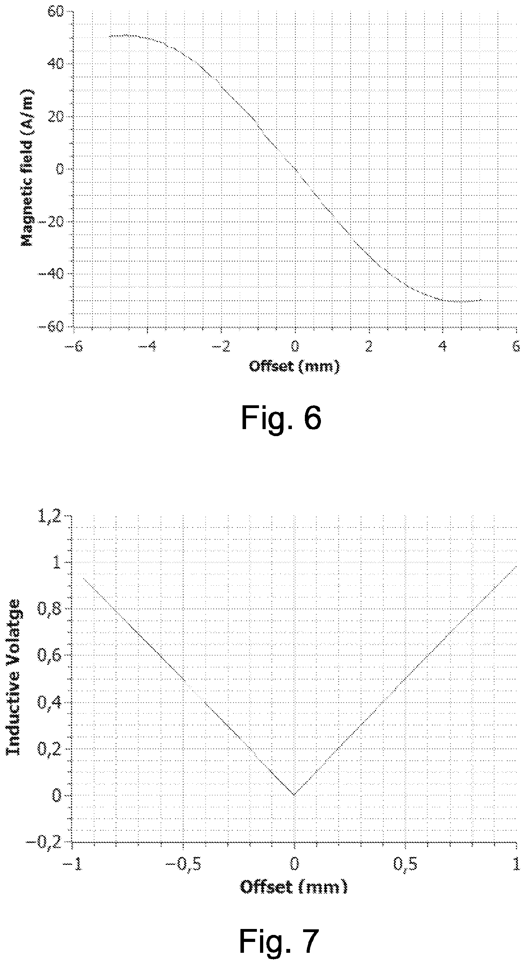

It is also important that the solenoid antenna and the flat spiral antenna have magnetically symmetrical arrangement. This achieves a state where the voltage on the flat spiral antenna induced from the activity of the solenoid antenna is zero. The fields at the ends of the solenoid antenna L2 are the same - but in mutual counter-phase (figure 6). If the flat spiral antenna L1 is placed symmetrically to the solenoid antenna, the magnetic field in the left half of the flat spiral antenna is exactly opposite to the one in the right half, and therefore the resulting integral through the whole surface of the flat spiral antenna L1 is zero, and the overall induced voltage on the solenoid antenna L2 is zero, too.

The distance between the antennas - that is, the distance between their longitudinal axes - is chosen in such a way that the electromagnetic isolation between both antennas is larger by at least 15dB than the ratio of the amplitudes of the signal transmitted by the transponder to the received signal from the initiator. This means, in practice, a creation of the isolation between the transmitting and receiving antenna of the transponder at least at the level of 80dB in 13,56-14,40MHz bandwidth. In such configuration the signal from the transmitting antenna is not received by the antenna for reception.

The size of the induced voltage on the flat spiral antenna depends on the accuracy of the placement of both antennas, as depicted on the figure 7. Offset means the accuracy error margin in the placement of the geometrical middle A from the middle of the solenoid antenna in the direction of x axis. The distance between the antennas means such mutual deposition (slide) of the geometrical middle A of the flat spiral antenna L1 against the geometrical middle of the solenoid antenna L2, where the maximal isolation between the transmitting and receiving antenna is achieved in bandwidth 13,56-14,40MHz. Usually, the magnetic middle is identical to the geometrical middle - this all depends on the resulting construction of the antenna, though.

The maximum sensitivity of the flat spiral antenna L1 to the surrounding electromagnetic fields is in the direction of the z axis, that is, in the direction that is perpendicular to its surface. The minimal sensitivity is in the direction of x, y axes. The maximal level of the magnetic field generated by the solenoid antenna L2 is in the direction of the x axis and in the direction of the z axis.

This achieves a high isolation between the antennas. The configuration according to this invention ensures a great insensitivity of the flat spiral antenna to the transmission of the solenoid antenna; the signal on the flat spiral antenna does not have to be filtered from the transmitted signal from the solenoid antenna. During the transmission from the solenoid antenna it is possible to receive the carrier signal from the initiator (PCD) and pursuant to its frequency and phase it is possible to continuously synchronize the transmitted signal.

The voltage on the flat spiral antenna L1 can be induced not only by the magnetic field from the solenoid antenna L2 but also by the whirling currents on the winding of the spiral antenna L1. It is thus necessary that the minimal distance D between the axes of antennas L1 and L2 is maintained. At D≥h distance the effect of the whirling currents is negligible.

An arrangement is preferable where the D distance of the axis of the flat spiral antenna L1 from the solenoid antenna L2 is basically identical to the length h of the solenoid antenna, whereby the middle A of the flat spiral antenna L1 is exactly in the transversal plane with the magnetic middle B of the solenoid antenna L2. The length of the flat antenna is equal to the length h of the solenoid and its width b is equal to ½ a. Such construed antenna system occupies the surface of approximately h x 3/2h (the diameter of the solenoid antenna is usually negligible compared to the dimensions of the whole system).

The dimensional and spatial configuration according to this invention ensures a selective insensitivity of the receiving antenna which is capable received the outer signal from the alien source (PCD) alongside the active transmission from the close, proximate antenna, neighboring within the common antenna system. It is not necessary to complicatedly process and filter the received signal. The invention allows effective control of the synchronization in the pseudo-passive mode of communication.

In case of the antenna system according to this invention the received signal from the initiator is distorted by the transmission of the transponder only negligibly, and no special synchronization circuits are necessary. Signal received by the transponder in such a way is repeatedly transmitted back as a modulation carrier frequency for the modulation of data, which ensures that both signals are accurate in the frequency and the modulation of data is realized only in the change of the phase (0°/180°). The connection of the impedance circuits of both antennas serves this point, where the output from the receiving antenna with the information concerning the phase is connected to the phase modulator of the transmitting antenna. The information concerning the phase of the received signal serves the purpose of synchronization of the transmitted modulated signal from the solenoid antenna.

The number of threads on the solenoid antenna L2 depends on the permeability of the core, but the resulting value of induction of the L2 for NFC applications should usually ranger from 1 to 2 µH, and quality Q=18-22. The receiving flat spiral antenna L1 can have 2 to 4 threads and quality Q=4-6 suffices.

In order to increase the electromagnetic isolation, the flat spiral antenna can be covered from one or both sides by the electrically conductive plate. Preferably, the conductive layer used can be at least 10 µm thick and placed above and/or below the surface of the spiral antenna. The distance of the conductive layer from the flat spiral antenna L1 in the direction of the z axis should range from 0,1 to 1 mm. The minimal dimensions of the conductive layer are a x b, so that the conductive layer covers total groundplan surface of the spiral antenna. The maximal dimensions of the conductive layer are a x 3/2h, where the width of the conductive layer in the x axis is identical to the length h of the solenoid antenna L2.

The advantage of the invention is mainly the simple arrangement of the antenna system and the simple connection of the respective circuits, whereby a high efficacy of the phase and frequency synchronization is achieved thanks to the physical bonds and relations between the transmitting and receiving antenna.

### Brief description of drawings

The invention is further disclosed by the drawings 1 to 9. In particular, the depicted solenoid antenna, flat spiral antenna, course of the magnetic field lines, and the examples of mutual dimensions are for illustration purposes only and cannot be interpreted as limiting the scope of protection.
Figure 1 is a graph depicting the efficacy in the transfer of the data depending on the phase inaccuracy for the carrier frequency 13,56 MHz. The value 1,0 means maximal efficacy.
Figure 2 depicts the magnetic field of the transmitting solenoid antenna L2.
Figure 3 is a geometrical arrangement of the orthogonal antenna system for the NFC platform in the view of the common surface of the carrier of both antennas.
Figure 4 is a side view of the arrangement from the figure 3, where the solenoid antenna is placed on the surface where the flat spiral antenna is spread. Figure 5 is a side view of the antenna system, where the solenoid antenna is in the front and its longitudinal axis lies in the plane of the flat spiral antenna.
Figure 6 depicts the course of the magnetic field along the x axis with the middle in the A point, while the length of the solenoid antenna is 9 mm. Figure 7 depicts the course of the induced voltage on the flat spiral antenna in dependence on the slide of the middle of the antenna relative to the A point, while the length of the solenoid antenna is 9 mm.
Figure 8 is a block diagram of the connection of the orthogonal antenna system with the feedback for the transfer of the amplitude modulated data. The solenoid antenna and the felt spiral antenna are symbolically depicted in the 90° angular rotation, which means that the antennas are mutually magnetically orthogonal.
Figure 9 depicts the placement of two conductive layers on both sides of the flat spiral antenna. On the left there is a view of the surface with the antennas; on the right there is a side view.

### Examples of realization

### Example 1

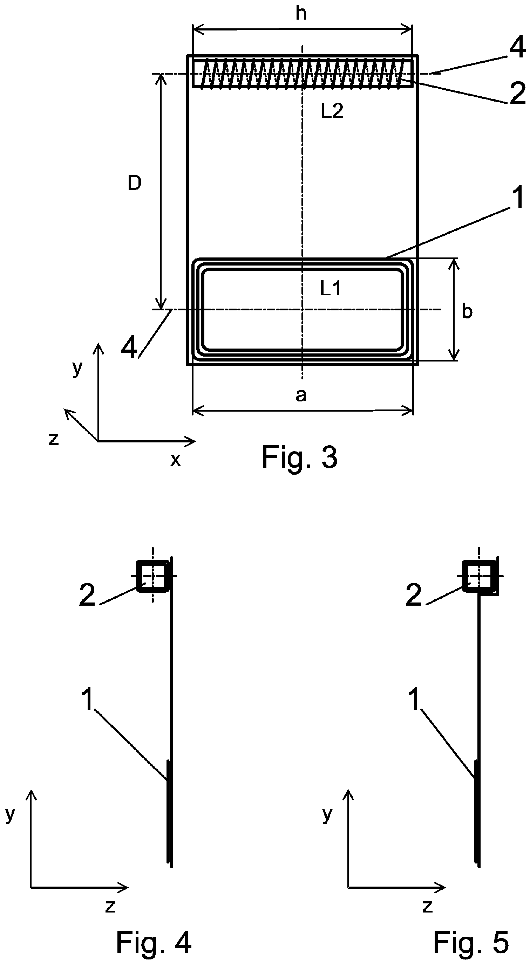

In this example according to figures 1 to 8 the antenna system has a solenoid antenna 2 L2 with the ferrite core and the flat spiral antenna 1 L1. The solenoid antenna 2 is 9 mm long. Both antennas 1, 2 are placed on the identical surface of the common carrier, which has approximate dimensions 9 mm x 13,5 mm.

Longitudinal axes 4 of both antennas 1, 2 are parallel. The flat spiral antenna 1 has rectangular ground plan; it is 9 mm long and 4,5 mm wide. The distance between the longitudinal axes 4 is 9 mm, which corresponds to the length of the solenoid antenna 2.

The resulting value of the induction of the solenoid antenna 2 in this example is 1,5 µH; its quality Q=20. The receiving flat spiral antenna 1 has 3 threads and quality Q = 5.

Both the magnetic middle of the flat spiral antenna 1 and the magnetic middle of the solenoid antenna 2 are in the middle plane; they are thus placed in a mutually symmetrical magnetic position. Each antenna 1, 2 has its own impedance circuit, impedance matching 3. Impedance matching 3 of the flat spiral antenna 1 is connected with the low-noise amplifier; its output leads to the phase modulator 5, whereby the data for the transfer by the transmitting solenoid antenna 2 enter to the phase modulator 5. The phase modulator 5 is connected with the transmitting element, the impedance matching 3 and the solenoid antenna 2 by the ferrite core.

### Example 2

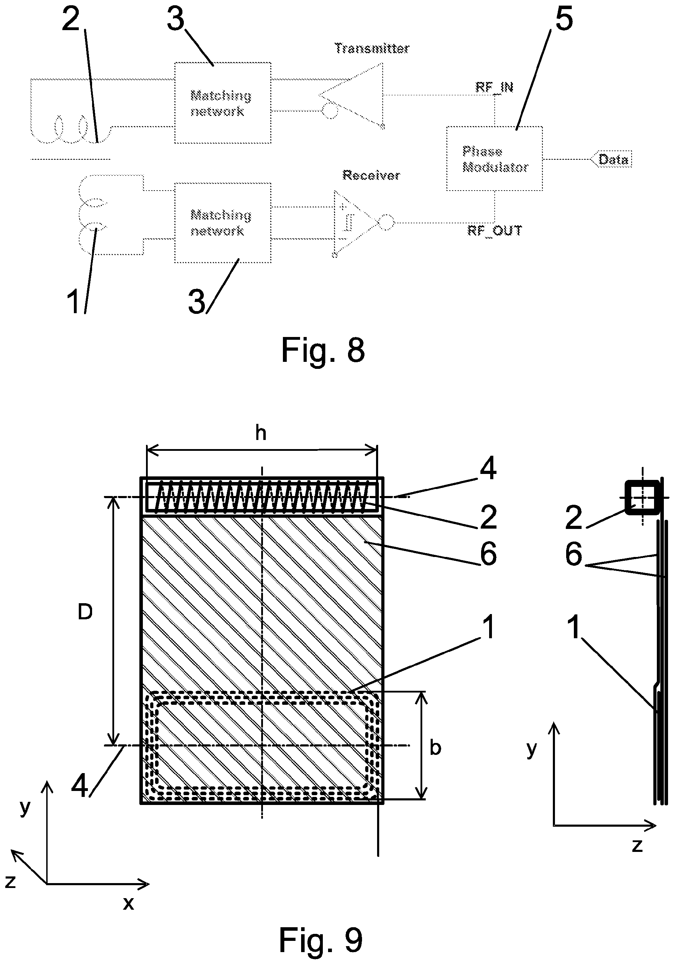

In this example the antenna system from the previous example has two conductive layers 6 according to figure 9. The conductive layer 6 is produced on the foil which subsequently covers the flat spiral antenna 1 as well as the opposite side of the carrier of the antennas 1, 2. The conductive layers 6 direction the course of the magnetic fields and increase the isolation of the surface of the spiral antenna 1.

### Industrial applicability

Industrial applicability is obvious. According to this invention it is possible to industrially and repeatedly produce and use the antenna system with two antennas for transmission and reception of the signal, where the receiving antenna is electromagnetically isolated from the transmitting antenna.

### List of related symbols

1 - flat spiral antenna L1
2 - solenoid antenna L2
3 - impedance matching
4 - longitudinal axis
5 - phase modulator
6 - conductive layer

h - length of the solenoid antenna
D - distance between the longitudinal axes of the antenna
A - middle of the flat spiral antenna
a - length of the flat spiral antenna
b - width of the flat spiral antenna
x, y, z - axes of the orthogonal coordinate system
NFC - Near field communication

## Claims

1. An antenna system with two antennas, for an NFC transfer, where a first antenna (2) is a solenoid antenna with a ferrite core, a second antenna (1) is a flat spiral antenna; the antennas (1, 2) are placed in a same basic plane or in mutually parallel basic planes whereby the solenoid antenna (2) has a length which corresponds to a length of the flat spiral antenna (1) within ± 10% margin and longitudinal axes (4) of both antennas (1, 2) are parallel, and a magnetic middle of the flat spiral antenna (1) lies in a transversal axial plane of the solenoid antenna (2) which runs through its magnetic middle, or a distance between the magnetic middle of the flat spiral antenna (1) and the transversal axial plane of the solenoid antenna (2) is a tenth of the length of the solenoid antenna (2) at most
**is characterized by the fact**, that
the distance between the longitudinal axis (4) of the solenoid antenna (2) and the longitudinal axis (4) of the flat spiral antenna is at least 0,75 times the length of the solenoid antenna (2) and each antenna (1, 2) has its own impedance matching network (3).

2. The antenna system with two antennas, for the NFC transfer, according to the claim 1 **is characterized by the fact**, that the antenna system has an electromagnetic isolation at least at 80dB level in a bandwidth 13,56-14,40 MHz.

3. The antenna system with two antennas, for the NFC transfer, according to the claim 1 or 2 **is characterized by the fact**, that the distance between the longitudinal axis (4) of the solenoid antenna (2) and the longitudinal axis (4) of the flat spiral antenna (1) is identical to the length of the solenoid antenna (2).

4. The antenna system with two antennas, for the NFC transfer, according to any of the claims 1 to 3 **is characterized by the fact**, that a length (a) of the flat spiral antenna (1) is equal to the length (h) of the solenoid antenna; a width (b) of the flat spiral antenna (1) is equal to a half of its length (a).

5. The antenna system with two antennas, for the NFC transfer, according to any of the claims 1 to 4 **is characterized by the fact**, that a value of an induction of the solenoid antenna (2) is 1 to 2 µH.

6. The antenna system with two antennas, for the NFC transfer, according to any of the claims 1 to 5 **is characterized by the fact**, that the flat spiral antenna (1) has 2 to 4 threads.

7. The antenna system with two antennas, for the NFC transfer, according to any of the claims 1 to 6 **is characterized by the fact**, that the flat spiral antenna (1) is covered from one or both sides by an electrically conductive layer (6).

8. The antenna system with two antennas, for the NFC transfer, according to the claim 7 **is characterized by the fact**, that the conductive layer (6) is at least 10 µm thick and its distance from the flat spiral antenna (1) in a direction of the axis ranges from 0,1 to 1 mm.

9. The antenna system with two antennas, for the NFC transfer, according to any of the claims 1 to 8 **is characterized by the fact**, that an output form the receiving flat spiral antenna (1) is connected to a phase modulator (5) of the transmitting solenoid antenna (2).

10. The antenna system with two antennas, for the NFC transfer, according to the claim 9 **is characterized by the fact**, that the flat spiral antenna (1) is connected to the impedance matching network (3), whereby a low-noise amplifier is connected to this impedance matching network (3).

## Patentansprüche

1. Ein Antennensystem mit zwei Antennen, zur NFC-Übertragung, wobei die erste Antenne (2) eine Solenoidantenne mit Ferritkern ist, zweite Antenne (1) eine flache Spiralantenne ist; die Antennen (1, 2) in der gleichen Basisebene oder in zueinander parallelen Basisebenen angeordnet sind, wobei die Solenoidantenne (2) eine Länge aufweist, die der Länge der flachen Spiralantenne (1) mit einer Toleranz von ± 10% entspricht und die Längsachsen (4) von beiden Antennen (1, 2) parallel sind, und der magnetische Mittelpunkt der flachen Spiralantenne (1) in der Querachsebene der Solenoidantenne (2) liegt, die durch ihren magnetischen Mittelpunkt läuft, oder der magnetische Mittelpunkt der flachen Spiralantenne (1) von der Querachsebene der Solenoidantenne (2) mit ihrem magnetischen Mittelpunkt höchstens ein Zehntel der Länge der Solenoidantenne (2) entfernt ist
**dadurch gekennzeichnet, dass**
der Abstand zwischen der Längsachse (4) der Solenoidantenne (2) und der Längsachse (4) der flachen Spiralantenne (1) einen Wert mindestens 0,75 x Länge der Solenoidantenne (2) hat und jede Antenne (1, 2) ihre eigene Impedanzanpassung (3) aufweist.

2. Das Antennensystem mit zwei Antennen, zur NFC-Übertragung gemäß Anspruch 1, **dadurch gekennzeichnet, dass** das Antennensystem elektromagnetische Isolation mindestens auf dem Niveau von 80 dB im Band 13,56 - 14,40M Hz aufweist.

3. Das Antennensystem mit zwei Antennen, zur NFC-Übertragung gemäß Anspruch 1 oder 2, **dadurch gekennzeichnet, dass** der Abstand zwischen der Längsachse (4) der Solenoidantenne (2) und der Längsachse (4) der flachen Spiralantenne (1) gleich der Länge der Solenoidantenne (2) ist.

4. Das Antennensystem mit zwei Antennen, zur NFC-Übertragung gemäß einem der Ansprüche 1 bis 3, **dadurch gekennzeichnet, dass** die Länge (a) der flachen Spiralantenne (1) gleich der Länge (h) der Solenoidantenne (2) ist, die Breite (b) der flachen Spiralantenne (1) gleich ihrer halben Länge ist.

5. Das Antennensystem mit zwei Antennen, zur NFC-Übertragung gemäß einem der Ansprüche 1 bis 4, **dadurch gekennzeichnet, dass** der resultierende Wert der Solenoidantenne (2) von 1 bis 2 µH beträgt.

6. Das Antennensystem mit zwei Antennen, zur NFC-Übertragung gemäß einem der Ansprüche 1 bis 5, **dadurch gekennzeichnet, dass** die flache Spiralantenne (1) 2 bis 4 Gewinde aufweist.

7. Das Antennensystem mit zwei Antennen, zur NFC-Übertragung gemäß einem der Ansprüche 1 bis 6, **dadurch gekennzeichnet, dass** die flache Spiralantenne (1) von einer oder von beiden Seiten mit einer elektrisch leitenden Schicht (6) bedeckt ist.

8. Das Antennensystem mit zwei Antennen, zur NFC-Übertragung gemäß Anspruch 7, **dadurch gekennzeichnet, dass** die leitende Schicht (6) mindestens 10 µm stark ist und ihr Abstand von der flachen Spiralantenne (1) in der Richtung der Achse in einem Bereich von 0,1 bis 1 mm ist.

9. Das Antennensystem mit zwei Antennen, zur NFC-Übertragung gemäß einem der Ansprüche 1 bis 8, **dadurch gekennzeichnet, dass** der Ausgang von der flachen Empfangs-Spiralantenne (1) an den Phasenmodulator (5) der Sende-Solenoidantenne (2) angeschlossen ist.

10. Das Antennensystem mit zwei Antennen, zur NFC-Übertragung gemäß Anspruch 9, **dadurch gekennzeichnet, dass** die flache Spiralantenne (1) an die Impedanzanpassung (3) angeschlossen ist, an welche ein rauscharmer Verstärker angeschlossen ist.

## Revendications

1. Un système d'antennes avec deux antennes pour transmission NFC où une première antenne (2) est solénoïde à noyau de ferrite, une deuxième antenne (1) est spirale plate ; les antennes (1, 2) sont situées dans un même plan de base ou dans des plans de base mutuellement parallèles, alors que l'antenne solénoïde (2) est de longueur qui correspond à la longueur de l'antenne spirale plate (1) de tolérance de ± 10 %, et des axes longitudinaux (4) des deux antennes (1, 2) sont parallèles, et le centre magnétique de l'antenne spirale plate (1) se trouve dans le plan transversal par rapport au plan axial de l'antenne solénoïde (2) passant par son centre magnétique ou bien la distance entre le centre magnétique de l'antenne spirale plate (2) et le plan axial transversal de l'antenne solénoïde (2) et son centre magnétique est un dixième de la longueur de l'antenne solénoïde (2) au maximum
**caractérisé en ce que**
la distance entre l'axe longitudinal (4) de l'antenne solénoïde (2) et l'axe longitudinal (4) de l'antenne spirale plate (2) représente au moins 0,75 x la longueur de l'antenne solénoïde (2) et chaque antenne (1, 2) a son propre réseau d'une adaptation d'impédance (3).

2. Le système d'antennes avec deux antennes pour transmission NFC selon la revendication 1 **caractérisé en ce que** le système d'antenne présente une isolation électromagnétique d'au moins 80 dB dans la bande 13,56-14,40 MHz.

3. Le système d'antennes avec deux antennes pour transmission NFC selon la revendication 1 ou 2 **caractérisé en ce que** la distance entre l'axe longitudinal (4) de l'antenne solénoïde (2) et l'axe longitudinal (4) de l'antenne spirale plate (2) est égale à la longueur de l'antenne solénoïde (2).

4. Le système d'antennes avec deux antennes pour transmission NFC selon quelconque des revendications 1 à 3 **caractérisé en ce qu'**une longueur (a) de l'antenne spirale plate (1) est égale à la longueur (h) de l'antenne solénoïde (2), une largeur (b) de l'antenne spirale plate (1) est égale à la moitié de sa longueur.

5. Le système d'antennes avec deux antennes pour transmission NFC selon quelconque des revendications 1 à 4 **caractérisé en ce qu'**une valeur résultante de l'induction de l'antenne solénoïde (2) est de 1 à 2µH.

6. Le système d'antennes avec deux antennes pour transmission NFC selon quelconque des revendications 1 à 5 **caractérisé en ce que** l'antenne spirale plate (1) comporte 2 à 4 spires.

7. Le système d'antennes avec deux antennes pour transmission NFC selon quelconque des revendications 1 à 6 **caractérisé en ce que** l'antenne spirale plate (1) est recouverte d'un côté ou des deux côtés d'une couche électroconductrice (6).

8. Le système d'antennes avec deux antennes pour transmission NFC selon la revendication 7 **caractérisé en ce que** la couche conductrice (6) est de l'épaisseur d'au moins 10 µm et sa distance de l'antenne spirale plate (1) dans la direction de l'axe est comprise entre 0,1 et 1 mm.

9. Le système d'antennes avec deux antennes pour transmission NFC selon quelconque des revendications 1 à 8 **caractérisé en ce que** la sortie de l'antenne spirale plate de réception (1) est connectée au modulateur de phase (5) de l'antenne solénoïde d'émission (2).

10. Le système d'antennes avec deux antennes pour transmission NFC selon la revendication 9 **caractérisé en ce que** l'antenne spirale plate (1) est connectée au réseau d'adaptation d'impédance (3) auquel est connecté un amplificateur à faible bruit.
